Europäisches Patentamt

European Patent Office

Office européen des brevets

(11) Veröffentlichungsnummer: **0 310 817**

**A1**

(12) **EUROPÄISCHE PATENTANMELDUNG**

(21) Anmeldenummer: **88114411.7**

(22) Anmeldetag: **03.09.88**

(51) Int. Cl.⁴: **G02B 25/00**

(30) Priorität: **05.09.87 DE 3729845**

(43) Veröffentlichungstag der Anmeldung:
**12.04.89 Patentblatt 89/15**

(84) Benannte Vertragsstaaten:
**DE FR GB IT**

(71) Anmelder: **Firma Carl Zeiss**

**D-7920 Heidenheim (Brenz)(DE)**

(84) **DE FR IT**

(71) Anmelder: **CARL-ZEISS-STIFTUNG trading as CARL ZEISS**

**D-7920 Heidenheim (Brenz)(DE)**

(84) **GB**

(72) Erfinder: **Fürter, Gerhard, Dipl.-Math.**
**Hinter den Gärten 10**
**D-7090 Ellwangen(DE)**
Erfinder: **Kelch, Gerhard, Dipl.-Math.**
**Egerlandstrasse 62/1**
**D-7080 Aalen(DE)**

(54) **Einlinsiges Leseglas.**

(57) Bei einem einlinsigen Leseglas, dessen Brechwert $D_{LG}$ = 1000 / Brennweite im Bereich von 6 dpt bis 24 dpt liegt und das mindestens eine asphärische Oberfläche aufweist, ist diese asphärische Fläche rotationssymmetrisch und weist einen Meridianschnitt auf, dessen Pfeilhöhe p (h) als Polynom beschrieben ist, das nur gerade Potenzen von h aufweist und dessen erstes Glied $h_2$ einen Kegelschnitt darstellt. Die asphärische Fläche ist augenseitig angeordnet, während die objektseitige Fläche sphärisch ist und einen Flächenbrechwert $D_{obj}$ aufweist, der eine Funktion des Brechwertes $D_{LG}$ des Leseglases ist.

Dieses Leseglas hat sehr gute Abbildungseigenschaften bei Gebrauch ohne Lesebrille bzw. ohne oder nahezu ohne Akkommodation, d.h. im Bereich seiner höchsten Vergrößerung. Diese Eigenschaften ändern sich bei einer Änderung der Gebrauchsbedingungen innerhalb gewisser Grenzen nur sehr wenig.

**Fig. 1**

EP 0 310 817 A1

## Einlinsiges Leseglas

Die vorliegende Erfindung betrifft ein einlinsiges Leseglas mit mindestens einer asphärischen Fläche, dessen Brechwert $D_{LG}$ ($= 1000/$Brennweite) im Bereich von 6 bis 24 dpt liegt.

Ein Leseglas wird dazu verwendet ein Objekt, beispielsweise eine schriftliche Unterlage vergrößert zu beobachten. Es dient bevorzugt als Lesehilfe. Das Leseglas wird mit Abstand über das zu betrachende Objekt gehalten, wobei dieser Abstand nicht größer sein darf als der des objektseitigen Brennpunkts des Leseglases. Ist dies der Fall so erzeugt das Leseglas ein aufrechtes, virtuelles Bild des Objekts, das hinter dem Objekt liegt und auf das das Auge des Beobachters akkommodieren muß.

Liegt das Objekt im Brennpunkt des Leseglases, so wird es nach Unendlich abgebildet. Dabei muß das Auge des Beobachters nicht akkommodieren und bei Alterssichtigen ist keine Lesebrille erforderlich. Zugleich wird bei dieser Objektlage die größtmögliche Vergrößerung des Leseglases erreicht.

Liegt das Objekt näher als der Brennpunkt des Leseglases, so besitzt das vom Objekt ausgehende Lichtbündel nach der Abbildung durch das Leseglas an einer bestimmten Stelle einen kleinsten Querschnitt. Auf diese Stelle muß das Auge des Benutzers akkommodieren, wenn das Objekt optimal scharf gesehen werden soll. Zugleich wird bei einer solchen Objektlage die größtmögliche Vergrößerung des Leseglases nicht erreicht; die erreichte Vergrößerung nimmt ab je näher das Leseglas an das Objekt gebracht wird.

Eine Betrachtung über Lesegläser, insbesondere auch asphärische Lesegläser findet sich in der Zeitschrift SO 9/1985, S. 7 - 16 (Aufsatz von Gaggioni und Ott). Daraus geht hervor (S. 15), daß man mit Lesegläsern nach dem Stand der Technik keine brauchbare Abbildung erhält, wenn sich das Objekt im Brennpunkt befindet, da dann die Verzeichnung störend große Werte annimmt. Um die Verzeichnung zu verringern wird üblicherweise das Leseglas dem Objekt angenähert. Damit verringert sich aber auch die erreichbare Vergrößerung und das Auge des Benutzers muß akkommodieren.

Es ist nun die Aufgabe der vorliegenden Erfindung ein Leseglas nach dem Oberbegriff des Anspruchs 1 so auszubilden, daß es bei Gebrauch ohne Lesebrille, bzw. ohne oder nahzu ohne Akkommodation, d.h. im Bereich seiner höchsten Vergrößerung sehr gute Abbildungseigenschaften aufweist. Insbesondere soll das Leseglas bis zum Glasrand eine hohe Abbildungsgüte bei geringer Verzeichnung bieten.

Diese Aufgabe wird durch ein Leseglas gelöst, dessen asphärische Flache nach dem kennzeichnenden Merkmal des Anspruchs 1 ausgebildet ist.

Die Gleichung des Meridianschnitts weist ein Glied zweiter Ordnung auf, das einen Kegelschnitt beschreibt, der sich beispielsweise als Hyperbel darstellen kann. Die Glieder höherer Ordnung stellen ein Polynom mit Gliedern geradzahliger Potenzen dar.

Bei einem Brechwert $D_{LG}$ von 6 dpt stellt sich der Meridianschnitt als eine flach verlaufende Kurve dar, bei der die asphärischen Bestimmungsgrößen $a_4$, $a_6$, $a_8$ und $a_{10}$ von relativ geringem Einfluß sind. Mit zunehmendem Brechwert krümmt sich die Meridianschnitt-Kurve stärker und die asphärischen Bestimmungsgrößen werden größer.

Mit der Ausbildung der asphärischen Fläche nach der Erfindung gelingt es die Verzeichnung klein zu halten. Dies schafft vor allem die Voraussetzung dafür, daß das Leseglas nach der Erfindung im Bereich seiner höchsten Vergrößerung verwendet werden kann. Der Farbfehler hängt bei einem zweiflächigen System, wie es das Leseglas nach der Erfindung darstellt eng mit der Verzeichnung zusammen; er kann nicht getrennt korrigiert werden. Da die asphärische Fläche des Leseglases zum Rand hin flacher wird, werden die prismatischen Umlenkungen und damit der Farbfehler kleiner als bei Verwendung rein sphärischer Flächen. Durch die Asphärisierung wird also der Farbfehler reduziert.

Zur optischen Bewertung der Lesegläser wird nicht nur die Verzeichnung (in %) herangezogen, sondern auch der Einstellfehler (in dpt) und der maximale bzw. mittlere Pupillenfehler (in dpt).

Wie schon einleitend ausgeführt, besitzt das vom Objekt ausgehende Lichtbündel nach der Abbildung durch das Leseglas an einer bestimmten Stelle einen kleinsten Querschnitt, sofern das Objekt nicht genau im objektseitigen Brennpunkt des Leseglases angeordnet ist. Der Ort dieses kleinsten Querschnitts ist die beste Einstellebene für das akkommodierende Auge des Benutzers. Die beste Einstellebene beim Blick durch die Mitte des Brillenglases weicht im allgemeinen von der besten Einstellebene bei seitlichem Blick durch das Leseglas ab. Diese Abweichung, gemessen in dpt, wird als Einstellfehler bezeichnet. Dieser Fehler darf nur einen Wert erreichen, der es dem Benutzer des Leseglases ermöglicht die Abweichung durch Akkommodation auszugleichen.

Bei Akkommodation auf die Einstellebene hängt die Unschärfe des Bildes vom Astigmatismus schiefer Bündel, aber auch von Öffnungsfehlern, wie sphärische Aberration und Koma ab. Zur Beurteilung der Unschärfe ist also die Abbildung des Lichts in Abhängigkeit vom Pupillenort zu betrachten.

Die Blende für die Abbildung durch das Leseglas ist die Augenpupille, deren mittlerer Durchmesser mit 4 mm angenommen werden kann. Um die Unschärfe des Bildes beurteilen zu können, teilt man die Pupille in kleine Teilpupillen auf und berechnet für jeden Objektpunkt die Lage des Bildes für jedes Teil-Lichtbündel. Abweichungen der Bildlagen von der Einstellebene bedeuten Unschärfe und werden im folgenden als Pupillenfehler bezeichnet. Als Maß für die Gesamtunschärfe im Bild können der maximale Pupillenfehler oder der über die Pupille gemittelte Pupillenfehler herangezogen werden.

Um eine hohe Abbildungsgüte zu erhalten, ist es notwendig den in dpt ausgedrückten Pupillenfehler so klein wie möglich zu halten.

Bei dem Leseglas nach der Erfindung lassen sich mit Hilfe eines Korrektionsprogrammes die asphärischen Bestimmungsgrößen $a_4$, $a_6$, $a_8$ und $a_{10}$ sowie die Größen R und E so bestimmen, daß das Leseglas bei der optimalen Gebrauchsbedingung (relativ hohe Leseentfernung, geringe Akkommodationserfordernis, bzw. hohe Vergrößerung) sich auszeichnet durch

- sehr geringe Verzeichnung
- geringen bzw. akkommodierbaren Einstellfehler und
- kleine maximale bzw. mittlere Pupillenfehler.

Dies gilt für einen, im Verhältnis zum Stand der Technik großen Durchmesser des Leseglases, so daß ein großes, zum Teil binokular nutzbares Sehfeld vorhanden ist.

Zur Optimierung des Leseglases trägt auch die Durchbiegung, ausgedrückt durch den Radius der sphärischen Fläche bei. Dieser Radius hängt vom Brechwert $D_{LG}$ des Leseglases ab, wobei diese Abhängigkeit im Kennzeichen des Anspruchs 2 angegeben ist.

Die Ansprüche 3 und 4 beinhalten Angaben über die bei einer gegebenen Akkommodationslage des Auges noch zulässigen Werte der Verzeichnung und geben damit dem Fachmann eine Anweisung für die Berechnung der zur Erreichung dieses Ziels erforderlichen Faktoren R, E und $a_4$ bis $a_{10}$.

Die Erfindung wird im folgenden anhand der Figuren 1 - 4 näher erläutert. Dabei zeigen:

Fig. 1 ein Ausführungsbeispiel eines nach der Erfindung ausgebildeten Leseglases mit einem Brechwert $D_{LG}$ = 16 dpt;

Fig. 2 eine graphische Darstellung der Tabelle 2;

Fig. 3a-c Unschärfe, Einstellfehler und Verzeichnung des Leseglases der Fig. 1 in Abhangigkeit von der Höhe h für eine erste Gebrauchsbedingung;

Fig. 4a-c die Fig. 3a-c entsprechenden Darstellungen für eine zweite Gebrauchsbedingung.

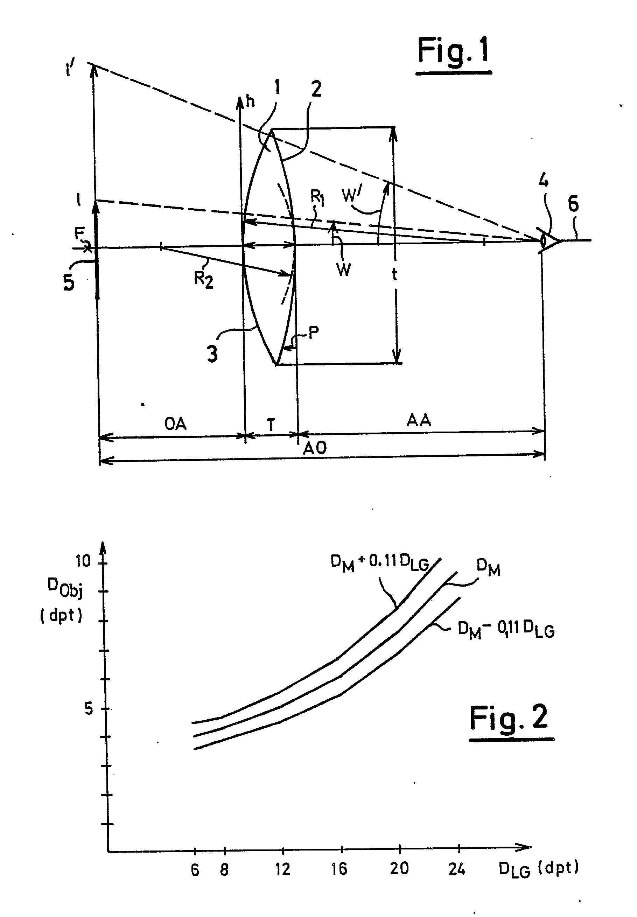

Das in Fig. 1 dargestellte Leseglas (1) ist einlinsig ausgebildet und weist eine augenseitige asphärische Oberfläche (2) und eine objektseitige sphärische Fläche (3) auf, deren Radius mit $R_1$ bezeichnet ist. Die Linse (1) hat eine mit T bezeichnete Mittendicke und einen Durchmesser t.

Die asphärische Fläche (2) ist rotationssymmetrisch zur optischen Achse (6). Der Radius ihres Scheitelkrümmungskreises ist mit $R_2$ bezeichnet. Der in Fig. 1 gezeigte Meridianschnitt der asphärischen Linse (1) läßt sich durch folgende Formel für die Pfeilhöhe p in Abhängigkeit von der Höhe h beschreiben:

$$p(h) = \frac{h^2/R_2}{1+\sqrt{1-(1-E)\cdot h^2/R_2^2}} + a_4 h^4 + a_6 h^6 + a_8 h^8 + a_{10} h^{10} \qquad /1/$$

Dabei bedeuten

E = Kennzahl für die Exzentrizität

. $a_4$ - $a_{10}$ = Konstanten (asphärische Bestimmungsgrößen)

Die folgende Wertetabelle gilt für ein Leseglas (1) nach Fig. 1, das aus PMMA mit einem Brechungsindex $n_e$ = 1.494 hergestellt ist.

Tabelle 1

| |
|---|
| $R_2$ - 46.15 mm |
| E 1.9500 |
| $a_4$ - $0.151748.10^{-6}$ |
| $a_6$ $0.443702.10^{-9}$ |
| $a_8$ - $0.130889.10^{-12}$ |
| $a_{10}$ $0.302600.10^{-16}$ |
| $R_1$ 82.33 mm |
| T 16.4 mm |
| f 62.50 mm |
| $D_{LG}$ 16.0 dpt |
| t 60.0 mm |

Bei diesem Ausführungsbeispiel beschreibt das erste Glied in Gleichung /1/ eine Hyperbel. Dies hängt vom gewählten Wert für E ab. Es ist jedoch auch möglich zu Lösungen für die asphärische Fläche zu kommen, die aus einer Kombination einer Parabel oder Ellipse mit einem Polynom bestehen.

Der objektseitige Brennpunkt des Leseglases (1) der Fig. 1 ist mit F bezeichnet. Wird ein Objekt (5) innerhalb der objektseitigen Brennweite angeordnet, so erzeugt das Leseglas (1) ein virtuelles Bild, das vom Auge (4) des Benutzers unter dem Winkel W' gesehen wird. Ohne Leseglas würde das Objekt (5) unter dem Winkel W gesehen werden. Die mittels des Leseglases (1) erzielte Vergrößerung V ist als $V = {}^I/I = \frac{\tan W'}{\tan W}$ definiert.

Beim Blick durch die Mitte eines Leseglases wird ein Objekt unter der Sollvergrößerung $V_M$ beobachtet. Beim Blick durch weiter außen liegende Bereiche des Leseglases erscheint das Objekt unter der Feld-Vergrößerung $V_W$. Die Abweichung dieser beiden Werte wird als Verzeichnung bezeichnet, wobei die Verzeichnung VZG definiert ist als

$$VZG = \left( \frac{V_W}{V_M} - 1 \right) \cdot 100\%.$$

Der Bildfehler Verzeichnung ist der störendste Faktor, so daß die Berechnung der Werte nach Tabelle 1 so geführt wird, daß die Verzeichnung möglichst klein, d.h. innerhalb der in den Ansprüchen 3 und 4 angegebenen Grenzen bleibt. Bei dieser Berechnung werden die asphärischen Bestimmungsgrößen $R_2$, E und $a_4$ bis $a_{10}$ festgelegt.

Zugleich wird auch die Durchbiegung des Leseglases, durch Berechnung des Frontradius $R_1$ optimiert. Dadurch läßt sich erreichen, daß sich die guten Abbildungswerte bei Änderung der Gebrauchsbedingungen des Leseglases so wenig wie möglich ändern. Die Berechnung wird also unter der Voraussetzung geführt, daß der Flächenbrechwert $D_{obj}$ der objektseitigen Fläche (3) eine Funktion des Brechwerts $D_{LG}$ des Leseglases ist. Diese Abhängigkeit kann beschrieben werden durch

$D_M$ - $K_1$ . $D_{LG} \leqq D_{obj} \leqq D_M$ + $K_1$ . $D_{LG}$

Dabei ist $D_{obj} = 1000 (n-1)/R_1$
n = Brechungsindex des Linsenmaterials
$K_1$ = Konstante
$D_M = D_M (D_{LG})$ nach

Tabelle 2

| $D_{LG}$ | 6 | 8 | 12 | 16 | 20 | 24 |
|---|---|---|---|---|---|---|
| $D_M$ | 4 | 4.25 | 5 | 6 | 7.5 | 9.5. |

Die Zahlenwerte der Tabelle 2 sind in Fig. 2 graphisch dargestellt um eine Interpolation zu ermöglichen. Dargestellt ist auch der Bereich, der sich bei einem Wert von $K_1$ = 0.11 ergibt. Es ist auch möglich und vorteilhaft die Berechnung von $D_{obj}$ so zu führen, daß dieser Wert in einem Bereich mit K = 0.055 um $D_M$ liegt. Der Wert $D_M$ selbst ist anhand von Berechnungen festgelegt.

Das Leseglas nach der Erfindung hat optimale Abbildungseigenschaften bei Gebrauch ohne Lesebrille oder ohne Akkommodation. Die guten Abbildungseigenschaften bleiben auch erhalten bei einer Änderung der Gebrauchsbedingungen in dem Sinne, daß die notwendige Akkommodation des Auges einen Wert von 1 dpt nicht überschreitet, d.h. bei einer Akkommodationslage $A_{KK}$ im Bereich

$0 \leq A_{KK} \leq 1$ dpt.

Die nachfolgende Tabelle gibt für zwei unterschiedliche Gebrauchsbedingungen des Leseglases nach Fig. 1 und Tabelle 1 die erreichten Vergrößerungen V und Sehfelddurchmesser SF an, wobei das Sehfeld auf die Pupillenmitte bezogen ist

Tabelle 3

| Lage | 1 | 2 |
|---|---|---|
| OA mm | 53,1 | 53,2 |
| AA mm | 130,5 | 80,4 |
| AO mm | 200,0 | 150,0 |
| $A_{KK}$ dpt | 0,5 | 0,5 |
| V | 3,25 | 2,55 |
| SF mm | 27,9 | 40,6 |

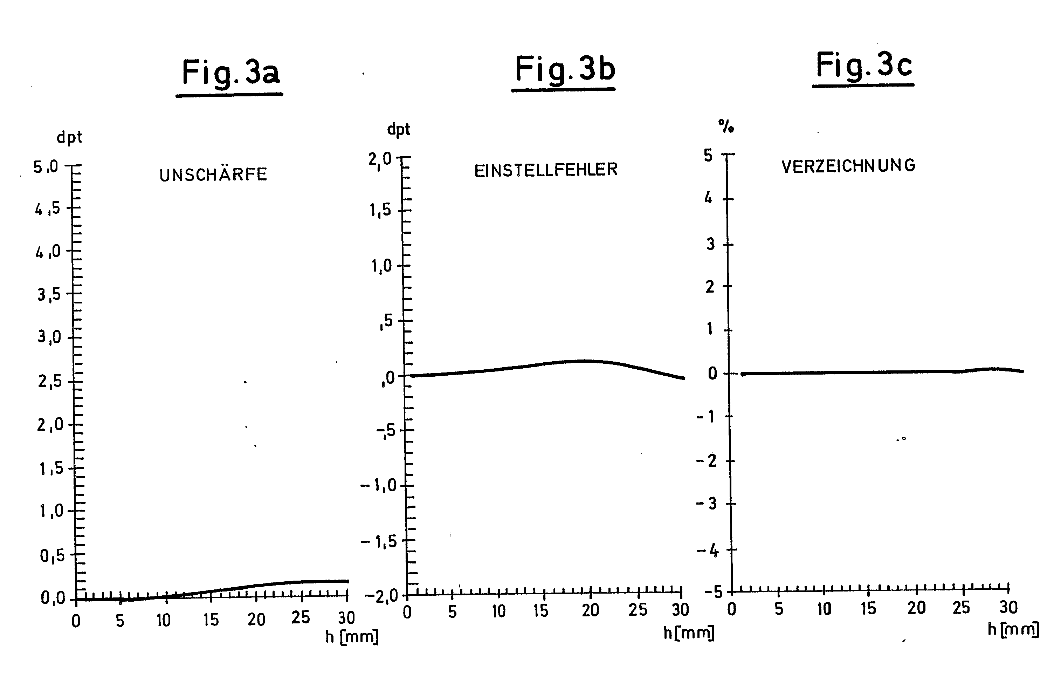

Für Lage 1 ist die Unschärfe (als maximaler Pupillenfehler) in Abhängigkeit von der Höhe h in Fig. 3a dargestellt. Man erkennt, daß die Unschärfe weit unter 0,5 dpt bleibt.

Der Einstellfehler ist in Fig. 3b dargestellt. Auch dieser Fehler bleibt unter 0,5 dpt.

Fig. 3c zeigt die Verzeichnung, die ebenfalls weit unter 0,5% bleibt.

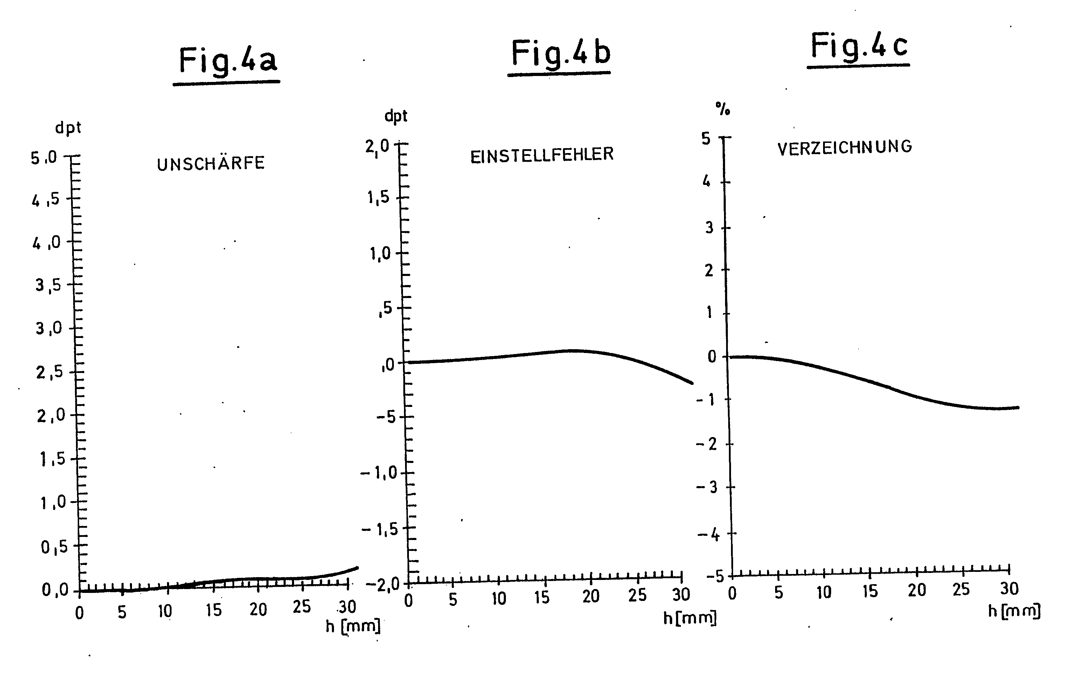

Die entsprechenden Darstellungen für die Gebrauchslage 2 finden sich in den Fig. 4a bis 4c. In dieser Lage erreicht die Verzeichnung einen Wert von - 1,3%, der im allgemeinen noch nicht als störend empfunden wird.

In der Gebrauchslage 2 hat der Benutzer sein Auge dem Leseglas sehr viel mehr genähert als in Lage 1 mit dem Ziel ein größeres Sehfeld zu erreichen. Er ist dabei von der zum Brechwert $D_{LG}$ = 16 dpt gehörenden optimalen Entfernung Auge/ Objekt (AO) um mehr als 20% abgewichen.

Berechnungen von Lesegläsern nach der Erfindung haben ergeben, daß die asphärischen Bestimmungsgrößen sowie die Durchbiegung des Leseglases ohne weiteres so bestimmt werden können, daß für einen Bereich von ± 20% um die zum jeweiligen Brechwert $D_{LG}$ gehörende optimale Entfernung Auge / Objekt (AO) das Leseglas bei einer gegebenen Akkommodationslage $A_{KK}$ des Auges von $0 \leq AKK \leq 1$ dpt so ausgebildet werden kann, daß die Verzeichnung kleiner ist als 5%. Dieser Wert für die Verzeichnung läßt sich über einen kreisförmigen Bereich mit einem Mindestdurchmesser t erzielen, der abhängig vom Brechwert $D_{LG}$ in der nachstehenden Tabelle 4 angegeben ist. Diese Verzeichnung stört die Beobachtung nicht, insbesondere da zugleich auch der Einstellfehler akkommodierbar und der Pupillenfehler sehr klein ist. Die zugehörigen optimalen Entfernungen Auge / Objekt (AO) sind ebenfalls in der Tabelle 4 angegeben:

| $D_{LG}$ | 6 | 8 | 12 | 16 | 20 | 24 |
|----------|-----|-----|-----|-----|-----|-----|
| t/mm | 80 | 68 | 56 | 48 | 44 | 40 |
| AO/mm | 350 | 350 | 300 | 200 | 150 | 150 |

Die Berechnung kann auch so geführt werden, daß bei einer Akkommodationslage $0 \leq Akk \leq 0,5$dpt für einen Bereich von 10% um die zum jeweiligen Brechwert $D_{LG}$ gehörende optimale Entfernung Auge / Objekt die Verzeichnung kleiner ist als 3%.

**Ansprüche**

1. Einlinsiges Leseglas, dessen Brechwert $D_{LG}$ = 1000/Brennweite im Bereich von 6 dpt bis 24 dpt liegt und das mindestens eine asphärische Oberfläche aufweist, dadurch gekennzeichnet, daß die asphärische Fläche (2) rotationssymmetrisch ist und einen Meridianschnitt aufweist, der durch eine Kombination von Kegelschnitt und Polynom nach folgender Formel beschrieben ist:

$$p(h) = \frac{h^2/R_2}{1+\sqrt{1-(1-E) \cdot h^2/R_2^2}} + a_4h^4 + a_6h^6 + a_8h^8 + a_{10}h^{10}$$

mit $p(h)$ = Pfeilhöhe
$R_2$ = Radius des Scheitelkrümmungskreises
$h$ = Abstand von der optischen Achse
$E$ = Kennzahl für die Exzentrizität
$a_4 - a_{10}$ = Konstanten.

2. Einlinsiges Leseglas nach Anspruch 1, dadurch gekennzeichnet, daß die asphärische Fläche (2) augenseitig angeordnet ist, und daß die objektseitig Fläche (3) als Sphäre ausgebildet ist, deren Flächenbrechwert $D_{obj}$ = 1000 (n-1)/$R_1$ vom Brechwert $D_{LG}$ des Leseglases so abhängt, daß gilt

$$D_M - K_1 \cdot D_{LG} \leq D_{obj} \leq D_M + K_1 \cdot D_{LG}$$

mit $R_1$ = Scheitelradius
$n$ = Brechungsindex des Linsenmaterials
$K_1$ = Konstante = 0.11
$D_M$ = $D_M$ ($D_{LG}$) nach

| $D_{LG}$ | 6 | 8 | 12 | 16 | 20 | 24 |
|----------|---|------|----|----|-----|-----|
| $D_M$ | 4 | 4.25 | 5 | 6 | 7.5 | 9.5. |

3. Einlinsiges Leseglas nach Anspruch 2, dadurch gekennzeichnet, daß für einen Bereich von ± 20% um die zum jeweiligen Brechwert $D_{LG}$ gehörende optimale Entfernung Auge / Objekt (AO) das Leseglas (1) bei einer gegebenen Akkommodationslage ($A_{KK}$) des Auges ($0 \leq A_{KK} \leq 1$ dpt) so ausgebildet ist, daß die Verzeichnung kleiner ist als 5%.

4. Einlinsiges Leseglas nach Anspruch 3, dadurch gekennzeichnet, daß bei einer Akkommodationslage $A_{KK}$ des Auges von $0 \leq A_{KK} \leq 0,5$ dpt für einen Bereich von ± 10% um die zum jeweiligen Brechwert $DL_G$ gehörende optimale Entfernung Auge / Objekt (AO) die Verzeichnung kleiner ist als 3%.

5. Einlinsiges Leseglas nach einem der Ansprüche 3 oder 4, dadurch gekennzeichnet, daß für die optimale Entfernung (AO) und den Mindestdurchmesser (t) des kreisförmigen Bereiches, innerhalb dessen die Verzeichnung kleiner als der angegebene Wert ist, die in der nachstehenden Tabelle angegebenen Maße abhängig vom Brechwert $D_{LG}$ gelten.

6

| $D_{LG}$ | 6 | 8 | 12 | 16 | 20 | 24 |
|---|---|---|---|---|---|---|
| t/mm | 80 | 68 | 56 | 48 | 44 | 40 |
| AO/mm | 350 | 350 | 300 | 200 | 150 | 150 |

## Fig.1

## Fig.2

Fig.3a

UNSCHÄRFE

Fig.3b

EINSTELLFEHLER

Fig.3c

VERZEICHNUNG

# Fig.4a

dpt

UNSCHÄRFE

# Fig.4b

dpt

EINSTELLFEHLER

# Fig.4c

%

VERZEICHNUNG

EP 0 310 817 A1

<table>
<tr><td colspan="2" align="center">Europäisches<br>Patentamt</td><td align="center"><b>EUROPÄISCHER RECHERCHENBERICHT</b></td><td>Nummer der Anmeldung<br><br>EP 88 11 4411</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 7, Nr. 188 (P-217)[1333], 17. August 1983; & JP-A-58 88 718 (CANON K.K.) 26-05-1983 .<br>--- | 1 | G 02 B 25/00 |
| A | DE-A-2 846 918 (K.P.I.)<br>* Ansprüche *<br>--- | 1 | |
| A | H. NAUMANN et al.: "Bauelemente der Optik","Taschenbuch für Konstrukteure", Seiten 327-328, Carl Hanser Verlag, München, DE; 9. "Beobachtungs- und Zielgeräte; Entfernungsmesser"<br>* Seite 327 *<br>--- | 1 | |
| A | GB-A- 7 144 (C. ZEISS)(A.D. 1909)<br>* Ansprüche *<br>--- | 1 | |
| A | US-A-4 469 413 (M. SHIRAYANAGI)<br>* Ansprüche *<br>--- | 1 | |
| A,D | NEUES OPTIK JOURNAL, SO 9/1985, Seiten 7-16; M. GAGGIONI et al.: "Binokular durchs Leseglas - ein neuer Aspekt"<br>----- | 1 | **RECHERCHIERTE SACHGEBIETE (Int. Cl.4)**<br><br>G 02 B |

Der vorliegende Recherchenbericht wurde für alle Patentansprüche erstellt

| Recherchenort | Abschlußdatum der Recherche | Prüfer |
|---|---|---|
| DEN HAAG | 22-11-1988 | PFAHLER R. |